# EUROPEAN PATENT SPECIFICATION

(11) **EP 4 171 163 B1**
(45) Date of publication and mention of the grant of the patent: **11.02.2026**
(21) Application number: 22200906.0
(22) Date of filing: 11.10.2022
(51) Int. Cl.: H04W 76/14, H04W 76/23, H04W 88/04, H04W 92/18

(54) **METHODS AND APPARATUS OF SI ACQUISITION FOR SIDELINK RELAY OPERATION**
VERFAHREN UND VORRICHTUNG ZUR SI-ERFASSUNG FÜR SIDELINK-RELAISBETRIEB
PROCÉDÉS ET APPAREIL D'ACQUISITION DE SI POUR UNE OPÉRATION DE RELAIS DE LIAISON LATÉRALE

(30) Priority: 19.10.2021 WO PCT/CN2021/124650; 22.09.2022 CN 202211156283
(43) Date of publication of application: 26.04.2023
(73) Proprietor: MediaTek Singapore Pte. Ltd., Singapore 138628 (SG)
(72) Inventor: WANG, Xuelong, Beijing (CN)
(74) Representative: Hoefer & Partner Patentanwälte mbB

(56) References cited:
- WO-A1-2021/136377
- ZTE: "Summary report of [AT113bis-e][603][Relay] Proposals from summary of agenda item 8.7.4.1 (ZTE)", vol. RAN WG2, no. electronic; 20210412 - 20210420, 19 April 2021 (2021-04-19), XP051996174, Retrieved from the Internet <URL:https://ftp.3gpp.org/tsg_ran/WG2_RL2/TSGR2_113bis-e/Inbox/R2-2104405.zip R2-2104405_Summary report of [AT113bis-e][603][Relay] -final.doc> [retrieved on 20210419]

## Description

### TECHNICAL FIELD

The disclosed embodiments relate generally to wireless communication, and, in particular, to system information (SI) acquisition for sidelink relay operation. More particularly, the present invention relates to a method and a user equipment (UE) according to the preamble of the independent claims, respectively. Such method and UE are disclosed in document WO 2021/136377 A1. A similar method and UE are disclosed in 3GPP document R2-2104405.

### BACKGROUND

5G radio access technology will be a key component of the modern access network. It will address high traffic growth and increasing demand for high-bandwidth connectivity. Wireless relay in cellular networks provides extended coverage and improved transmission reliability. Long term evolution (LTE) network introduced 3GPP sidelink, the direct communication between two user equipment (UEs) without signal relay through a base station. In 3GPP New Radio (NR), sidelink continues evolving. With new functionalities supported, the sidelink offers low latency, high reliability and high throughout for device to device communications. Using sidelink for wireless relay provides a reliable and efficient way for traffic forwarding. A variety of applications between the remote UE and the network may rely on communication over the relaying channel provided by the relay UE, such as vehicle-to-everything (V2X) communication, public safety (PS) communication, and so on. During the sidelink relaying operation, the network may update the System Information (SI). Then the relay UE and remote UE may need to acquire the updated SI.

Improvements and enhancements are required to deliver the update SI for the remote UE efficiently.

### SUMMARY

A method and a UE are provided for system information delivery through a sidelink relay in a wireless network and are defined in the independent claims. The dependent claims define preferred embodiments thereof. In one novel aspect, the relay UE obtains and maintains a list of interested system information block (SIB) types of the remote UE, acquires the updated SI/SIBs, and forwards the updated SIBs that the remote UE is interested in. Preferably, the UE establishes a sidelink connection with a remote UE, obtains a list of interested SIB types of the remote UE, receives a short message from the wireless network, acquires one or more SIBs from the wireless network based on the received short message, and forwards one or more selected SIBs to the remote UE, wherein each selected SIB is an acquired SIB that is on the list of interested SIB types of the remote UE. Preferably, the list of interested SIB types is obtained using a PC5 radio resource control (RRC) message. Preferably, the short message from the wireless network indicates an SI modification or a public warning system (PWS) notification. Preferably, the relay UE acquires the one or more SIBs with on-demand SIB acquisition procedure. Preferably, the relay UE stores/maintains the list of interested SIB types of the remote UE within a remote UE context of the remote UE during the lifetime of the remote UE.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network for system information acquisition for sidelink relay operation in accordance with embodiments of the current invention.
Figure 2 illustrates an exemplary NR wireless system with centralized upper layers of the NR radio interface stacks in accordance with embodiments of the current invention.
Figure 3A illustrates exemplary diagrams NR wireless network with an integration of two UEs update in accordance with embodiments of the current invention.
Figure 3B illustrates exemplary diagrams of NR wireless network with multiple remote UEs of SI acquisition for sidelink relay in accordance with embodiments of the current invention.
Figure 4 illustrates exemplary flow diagram of the relay UE sending the update SIBs interested by the remote UE through the sidelink to the remote UE in accordance with embodiments of the current invention.
Figure 5 illustrates exemplary diagrams of detailed relay UE procedures for SI acquisition through the sidelink in accordance with embodiments of the current invention.
Figure 6 illustrates an exemplary flow chart for the SI acquisition through sidelink relay operation in accordance with embodiments of the current invention.

### DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc., collectively referred to as "elements". These elements may be implemented using electronic hardware, computer software, or any combination thereof. Whether such elements are implemented as hardware or software depends upon the particular application and design constraints imposed on the overall system.

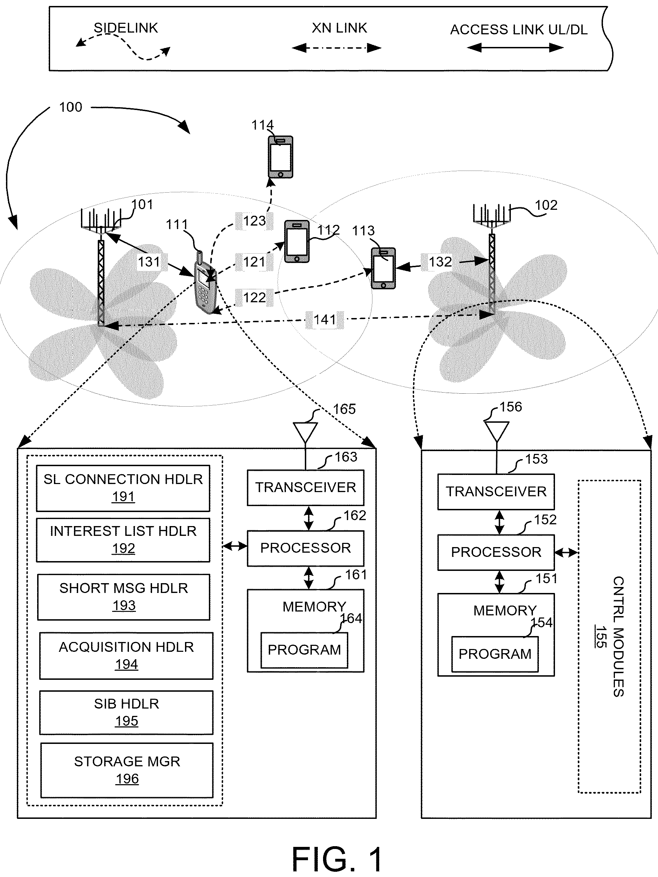

Figure 1 is a schematic system diagram illustrating an exemplary wireless network for system information acquisition for sidelink relay operation in accordance with embodiments of the current invention. The wireless network can be a new radio (NR) network or adopt other radio access technologies. The wireless network supports various wireless communication services. These services may have different quality of service (QoS) requirements e.g., latency and reliability requirements. Wireless network 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. The network can be a homogeneous network or heterogeneous network, which can be deployed with the same frequency or different frequency. gNB 101 and gNB 102 are base stations in the NR network, the serving area of which may or may not overlap with each other. Backhaul connection, such as 141 connects the non-co-located receiving base units, such as gNB 101 and gNB 102. These backhaul connections can be either ideal or non-ideal. gNB 101 is connected with gNB 102 via Xninterface 141.

Wireless network 100 also includes multiple communication devices or mobile stations, such as user equipments (UEs) 111, 112, 113, and 114. The UE may also be referred to as a mobile terminal, a mobile phone, smart phone, wearable, an IoT device, a table let, a laptop, or other terminology used in the art. The exemplary mobile devices in wireless network 100 have sidelink capabilities. The mobile devices can establish one or more connections with one or more base stations, such as gNB 101 and gNB 102. The mobile device may also be out of connection with the base stations with its access links but can transmit and receive data packets with another one or more other mobile stations or with one or more base stations through sidelink connections. The out of connection UEs can be an in-coverage UE or an out-of-coverage UE. The out-of-coverage UE may also obtain SI updates through sidelink connections.

UE 111, served as the relay UE, is served by access link 131 with gNB 101. UE 111 also establishes sidelink 121 with remote UE 112, sidelink 122 with remote UE 113, and sidelink 123 with remote UE 114. In one novel aspect, the remote UE acquires SI and/or SI updates through the sidelink PC5 interface. SI can be one or a plural of SIB (SI Blocks). In one scenario, in-coverage remote UE 112 does not have an active access link /Uu interface link with wireless network 100, such as when the remote UE 112 is in RRC_IDLE or RRC_INACTIVE state. Remote UE 112 receives SI update and other system information through relay UE 111 over sidelink 121. In other scenarios, in-coverage UE 113 has an access link connection/Uu interface 132 with UL and downlink (DL) connections with gNB 102 as well as a sidelink connection 122 with UE 111. UE 113 can acquire any necessary SI over the Uu interface connection 132 or through the sidelink /PC5 interface connection 122 with relay UE 111. In yet another scenario, out-of-coverage UE 114 does not have an access link/Uu interface link with wireless network 100. Out-of-coverage UE 114 receives SI update and other system information through relay UE 111 over sidelink 123.

Figure 1 further illustrates simplified block diagrams of a base station and a mobile device/UE for SI acquisition. gNB 102 has an antenna 156, which transmits and receives radio signals. An RF transceiver circuit 153, coupled with the antenna, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 103. Memory 151 stores program instructions and data 154 to control the operations of gNB 102. gNB 102 also includes a set of control modules 155 that carry out functional tasks to communicate with mobile stations.

UE 111 has an antenna 165, which transmits and receives radio signals. An RF transceiver circuit 163, coupled with the antenna, receives RF signals from antenna 165, converts them to baseband signals, and sends them to processor 162. Preferably, the RF transceiver may comprise two RF modules (not shown). A first RF module is used for HF transmitting and receiving, and the other RF module is used for different frequency bands transmitting and receiving, which is different from the HF transceiver. RF transceiver 163 also converts received baseband signals from processor 162, converts them to RF signals, and sends out to antenna 165. Processor 162 processes the received baseband signals and invokes different functional modules to perform features in the UE 111. Memory 161 stores program instructions and data 164 to control the operations of the UE 111. Antenna 165 sends uplink transmission and receives downlink transmissions to/from an antenna of gNB 101.

The UE 111 also includes a set of control modules that carry out functional tasks. These control modules can be implemented by circuits, software, firmware, or a combination of them. A sidelink connection manager 191 establishes an SL connection in the wireless network, wherein the UE is served by an access link with a base station in the wireless network. An interested list handler 192 obtains a list of interested system information block (SIB) types of the remote UE. A short message handler 193 receives a short message from the wireless network through the access link. An acquisition handler 194 acquires one or more SIBs from the wireless network based on the received short message. A SIB handler 195 forwards one or more selected SIBs to the remote UE, wherein each selected SIB is an acquired SIB that is on the list of interested SIB types of the remote UE. A storage manager 196 stores the list of interested SIB types of the remote UE within a remote UE context of the remote UE during the lifetime of the remote UE.

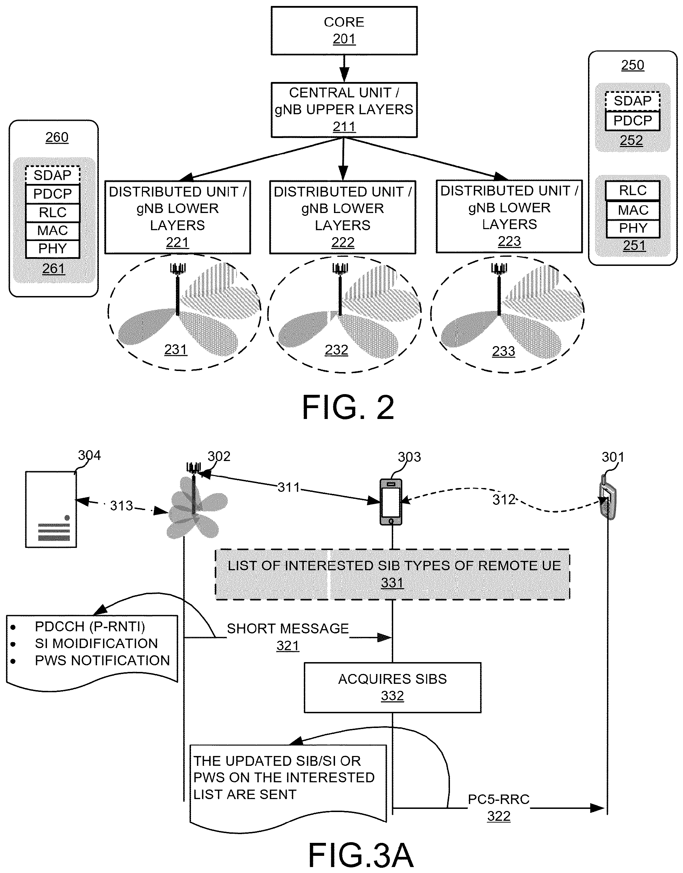

Figure 2 illustrates an exemplary NR wireless system with centralized upper layers of the NR radio interface stacks in accordance with embodiments of the current invention. Different protocol split options between central unit (CU) and distributed unit (DU) of gNB nodes may be possible. The functional split between the CU and DU of gNB nodes may depend on the transport layer. Low performance transport between the CU and DU of gNB nodes can enable the higher protocol layers of the NR radio stacks to be supported in the CU, since the higher protocol layers have lower performance requirements on the transport layer in terms of bandwidth, delay, synchronization and jitter. Preferably, SDAP and PDCP layer are located in the CU, while RLC, MAC and PHY layers are located in the DU. A Core unit 201 is connected with one central unit 211 with gNB upper layer 252. In one embodiment 250, gNB upper layer 252 includes the PDCP layer and optionally the SDAP layer. Central unit 211 is connected with distributed units 221, 222, and 221. Distributed units 221, 222, and 223 each corresponds to a cell 231, 232, and 233, respectively. The DUs, such as 221, 222 and 223 includes gNB lower layers 251. Preferably, gNB lower layers 251 include the PHY, MAC and the RLC layers. In another embodiment 260, each gNB has the protocol stacks 261 including SDAP, PDCP, RLC, MAC and PHY layers.

Preferably, the SI/SIB update is delivered to a remote UE by the relay UE through a sidelink connection between the remote UE and the relay UE. The sidelink relay can be configured to be one-hop relay or multi-hop relay. Further, a relay UE may be configured to forward SI/SIB update to multiple remote UEs.

Figure 3A illustrates exemplary diagrams NR wireless network with an integration of two UEs in accordance with embodiments of the current invention. A remote UE 301 established a relay path with a gNB 302 through a relay UE 303. Relay UE 303 communicates with gNB 302 via access link 311. Relay UE 303 communicates with remote UE 301 through sidelink 312. gNB 302 transmits data packets destined to remote UE 301 through DL to relay UE 303 and receives data packets from remote UE 301 through UL from relay UE 303. In a NR network, gNB 302 is connected with network entity 304 via S1 link 313. Relay UE 303 relays the traffic between the gNB 302 and remote UE 301. Relay UE 303 can operate as Layer 2 Relay or Layer 3 Relay. Preferably, while remote UE 301 is in the RRC-IDLE state, the relay UE 303 relays the SI Request to gNB 302 for remote UE 301. Preferably, while remote UE 301 is in the RRC-CONNECTED state, remote UE 301 has an access link, including uplink (UL) and downlink (DL) with gNB 302 in addition to the sidelink 312 established with relay UE 303. In an NR system, remote UE 301 can get SI update through its the access link/Uu interface link directly with gNB 302. Remote UE 301, in RRC-CONNECTED state can also get the SI update from the sidelink connection /PC5 interface connection 312 through relay UE 303.

In one novel aspect, at step 331, relay UE 303 obtains and maintains a list of interested SIB types of remote UE 301. Relay UE 303 receives short message from gNB 302, acquires the updated SI/SIBs, and forwards the updated SIBs that remote UE 301 is interested in.

In the NR network, short messages, in paging downlink control information (DCI), are used to send SI modification and public warning system (PWS) notification to a UE. At step 321, relay UE 303 receives a short message from gNB 302. The short messages can be transmitted on physical downlink control channel (PDCCH) using paging radio network temporary identifier (P-RNTI) with or without associated Paging message using short message field in DCI format 1_0. In one novel aspect, relay UE 303 acquires the updated SI/PWS based on the short messages at step 332, and at step 322, forwards the SI/PWS to remote UE 301 through the sidelink connection with PC5 RRC messages. In another option, relay UE 303 forwards the short message to remote UE 301.

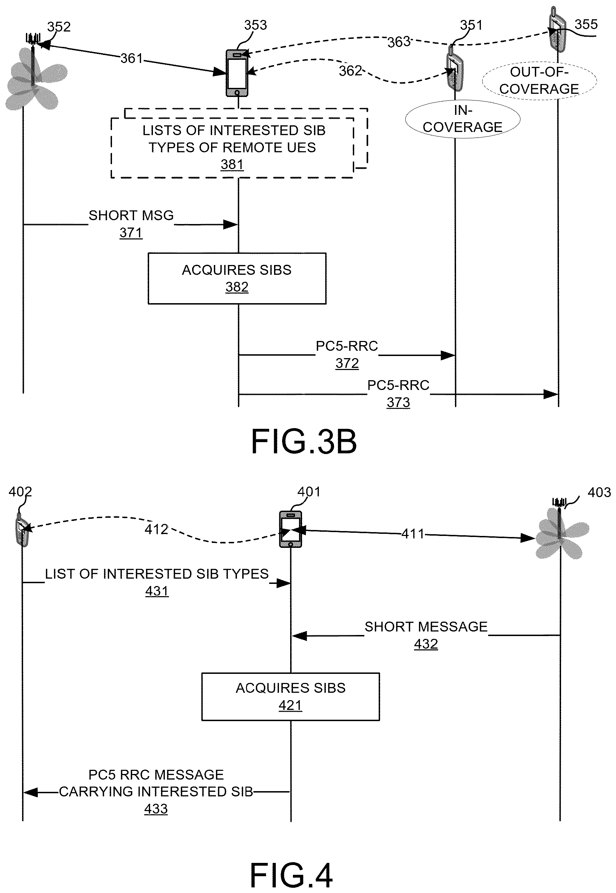

Figure 3B illustrates exemplary diagrams of NR wireless network with multiple remote UEs of SI acquisition for sidelink relay in accordance with embodiments of the current invention. Relay UE 353 establishes an access link 361 to gNB 352. In-coverage remote UE 351 established a sidelink 362 with relay UE 353. Out-of-coverage remote UE 355 establishes sidelink 363 with relay UE 353. Preferably, relay UE 353 forwards SI/PWS to in-coverage UE 351 and out-of-coverage 355. At step 381, relay UE 353 obtains lists of interested SIB types for each remote UEs, including in-coverage UE 351 and out-of-coverage UE 355. Preferably, the list of interested SIB types for each UE is stored within a remote UE context of the remote UE during the lifetime of the corresponding remote UE. For example, the list of interested SIB types for remote UE 351 is stored in the remote UE context of UE 351; and the list of interested SIB types for remote UE 355 is stored in the remote UE context of UE 355. At step 371, relay UE 353 receives a short message, which indicates an SI modification and/or PWS notifications. At step 382, relay UE 353 acquires updated SI/SIBs as indicated in the short message. In one novel aspect, relay UE 353 maintains the list of interested SIB types for each remote UE and, using the sidelink, forwards the updated SIB on the interested SIB types list to corresponding remote UEs. For example, at step 372, relay UE 353 forwards the update SIBs that remote UE 351 is interested to remote UE 351 using PC5 RRC message. At step 373, relay UE 353 forwards the update SIBs that remote UE 355 is interested to remote UE 355 using PC5 RRC message.

In one novel aspect, the relay UE receives the short message from the gNB, acquires the SI/PWS and sends it to the remote UE. By just sending the modified SI to remote UE (in RRC_CONNECTED state or RRC_IDLE/RRC_INACTIVE state), the potential signaling over Uu between remote UE in RRC_CONNECTED state and gNB can be avoided, since the remote UE does not need to request the SI over the Uu interface in an on-demand manner. The potential signaling over the PC5 interface of the sidelink between the remote UE in RRC_IDLE/RRC_INACTIVE state and the relay UE can also be avoided, since the remote UE does not need to request the SIB over the PC5 interface from the relay UE in an on-demand manner.

Figure 4 illustrates exemplary flow diagram of the relay UE sending the update SIBs interested by the remote UE through the sidelink to the remote UE in accordance with embodiments of the current invention. Relay UE 401 has an access link connection 411 with a gNB 403. Relay UE 401 is also connected with remote UE 402 with a sidelink 412. At step 431, relay UE 401 obtains list of interested SIB types from remote UE 402. Remote UE 402 may send the list of interested SIB type to relay UE 401 during the establishment of the PC5 connection or after the PC5 connection is established. Preferably, relay UE 401 obtains and/or updates the list of interested SIB types of remote UE 402 by maintain the list of all SIB requests from remote UE 402. At step 432, relay UE 401 receives the short message from gNB 403 via the Uu interface. At step 421, relay UE 401 gets the updated SIBs from the network after receiving the short message. At step 433, relay UE 401 forwards only those SIBs that remote UE 402 is interested to remote UE 402. From PC5-RRC perspective, this alternative specifies a type of "SIB subscription" signaling exchange between the relay UE and the remote UE. Remote UE 402 sends the list of SIBs interested to the relay UE 401 via existing PC5-RRC message or a new PC5-RRC message. Preferably, the PC5-RRC message is a new PC5-RRC message used during the establishment of a PC5 RRC connection. After relay UE 401 receives this list, relay UE 401 maintains the list within the remote UE context during the lifetime of the remote UE (i.e., as long as the remote UE, such as remote UE 402, is still connected with the relay UE via PC5). In this way, when relay UE 401 acquires the update SIB(s) from the network, relay UE 401 only sends to remote UE 402 the SIBs interested by the remote UE 402 via PC5 RRC. Preferably, during lifetime of PC5 RRC connection established between relay UE 401 and remote UE 402, relay UE 401 records all of the SIB request as requested by remote UE 402 (e.g., via PC5 RRC message). Based on the SIB request from the remote UE, relay UE 401 maintains a list of SIBs interested by the remote UE. When relay UE 401 receives the short message from the network, relay UE 401 first acquires the SIB(s). Preferably, relay UE 401 acquires the one or more SIBs with on-demand SIB acquisition procedure, for example, by its own dedicatedSIBRequest when relay UE 401 is in RRC_CONNECTED state. Subsequently, relay UE 401 sends to remote UE 402 only the SIBs interested by remote UE 402 via PC5 RRC.

In another alternative (not shown in the drawing), when remote UE 402 establishes RRC connection with the base station/gNB 403, the remote UE 402 may perform on-demand procedure, e.g., requesting the SIBs from the network via dedicatedSIBRequest signaling over the Uu interface. gNB 403 can record such request from remote UE 402 within its UE context. Subsequently, gNB 403 notifies remote UE's SIB interests (e.g., a list of SIB types) to the relay UE 401 via RRC message, such as the RRCReconfiguration message. This can happen when relay UE 401 starts its relaying service or during the relaying operation. After relay UE 401 receives the remote UE's SIB interests (e.g., a list of SIB), relay UE 401 maintains the list within the remote UE context during the lifetime of remote UE (i.e., as long as the remote UE 402 is still connected with relay UE 401 via PC5). In this way, when relay UE 401 acquires the updates SI from the network, relay UE 401 only sends to remote UE 402 the SIBs interested by the remote UE via PC5 RRC. In another alternative, when relay UE 401 receives the short message from the network, relay UE 401 first acquires the SI (e.g., by its own dedicatedSIBRequest when relay UE 401 is in RRC_CONNECTED state). Subsequently, relay UE 401 sends the list of changed SIB types to the remote UE 402. When remote UE 402 receives the list of changed SIB type, the remote UE 402 can request the changed SIB (s) via on-demand request over PC5, if the remote UE needs the changed SIB(s). In this way, relay UE 401 only sends to remote UE 402 the SIBs interested by remote UE 402 via PC5 RRC.

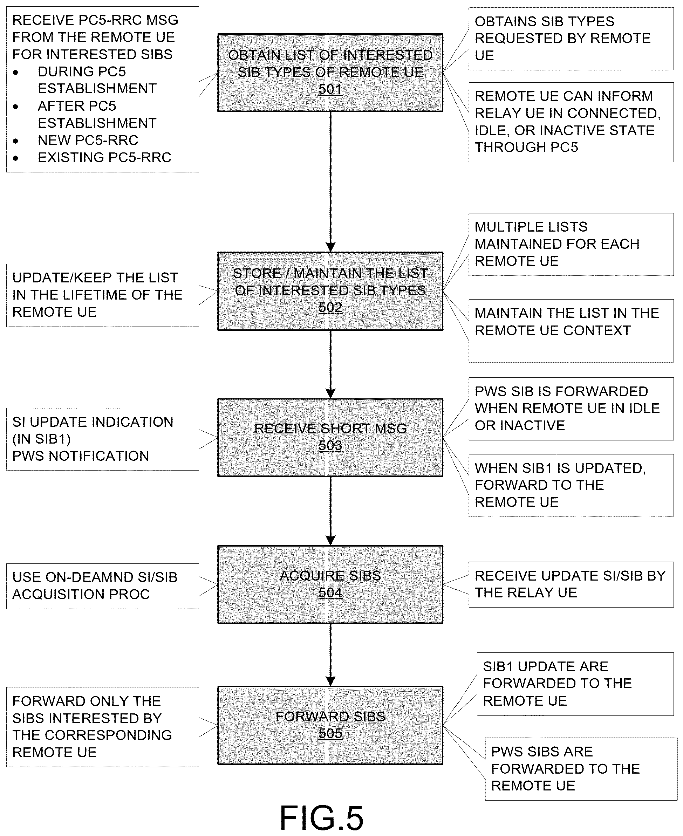

Figure 5 illustrates exemplary diagrams of detailed relay UE procedures for SI acquisition through the sidelink in accordance with embodiments of the current invention. The relay UE established access link with a gNB in the wireless network. The relay UE obtains a list of interested SIB types of a remote UE at step 501. The list of interested SIB types of the remote UE is obtained through a PC5 RRC messages, either during the establishment of the sidelink, or after the establishment of the sidelink. The PC5 RRC message can be an existing PC5 RRC message or a new PC5 RRC message. When the sidelink between the relay UE and the remote UE is established, the remote UE can inform/update the list of interested SIB types in any UE state, including RRC_CONNECTED, RRC_IDLE, and RRC_INACTIVE. The remote UE can be in-coverage or out-of-coverage.

At step 502, the relay UE maintains or stores the list of interested SIB types for each remote UE. The relay UE obtains and/or updates the list of the interested SIB types for the corresponding remote UE during the lifetime of the remote UE, which is the time when PC5 connection is active. The relay UE can maintain multiple lists of interested SIB types for multiple corresponding remote UEs. The list of interested SIB types is maintained in a UE context for corresponding remote UE.

When the relay UE receives a short message at step 503, the relay UE acts on the short message considering all the remote UEs with sidelink connections. The short message received from the network indicates SI update and/or PWS notification. The SI update indication can be a SIB1 with updates. Preferably, the PWS SIB is forwarded to the remote UE when the remote UE is in RRC_IDLE or RRC_INACTIVE. Preferably, when the SIB1 is updated, the SIB1 is forwarded to the remote UE.

The relay UE acquires SIBs at step 504.
Preferably, the relay UE acquires updated SIBs based on the received short message. The relay UE uses the on-demand SI/SIB acquisition procedure, such as with relay UE's dedicatedSIBRequest when the relay UE is in the RRC_CONNECTED state. The relay UE receives the SI/SIB updates through the access link with the gNB.

The relay UE forwards one or more SIB/SI to the remote UE at step 505. Since the relay UE maintains the list of interested SIB types for each remote UE, only the interested SIBs are forwarded to each corresponding UEs. Preferably, SIB1 updates are forwarded to the remote UE. Preferably, PWS SIBs are forwarded to the remote UEs.

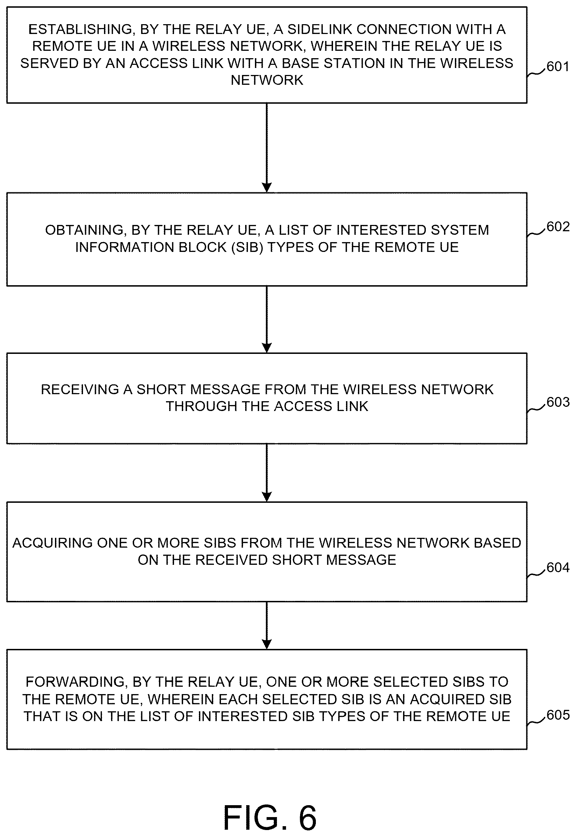

Figure 6 illustrates an exemplary flow chart for the SI acquisition through sidelink relay operation in accordance with embodiments of the current invention. At step 601, the UE establishes a sidelink connection with a remote UE in a wireless network, wherein the relay UE is served by an access link with a base station in the wireless network. At step 602, the UE obtains a list of interested system information block (SIB) types of the remote UE. At step 603, the UE receives a short message from the wireless network through the access link. At step 604, the UE acquires one or more SIBs from the wireless network based on the received short message. At step 605, the UE forwards one or more selected SIBs to the remote UE, wherein each selected SIB is an acquired SIB that is on the list of interested SIB types of the remote UE.

Although the present invention has been described in connection with certain specific embodiments for instructional purposes, the present invention is not limited thereto.

## Claims

1. A method for a relay user equipment, in the following also referred to as UE, comprising:
establishing, by the relay UE, a sidelink connection with a remote UE in a wireless network, wherein the relay UE is served by an access link with a base station in the wireless network (601);
obtaining, by the relay UE, a list of interested system information block, in the following also referred to as SIB, types of the remote UE (602);
**characterized by**:
receiving a short message from the wireless network through the access link (603);
acquiring one or more SIBs from the wireless network based on the received short message (604); and
forwarding, by the relay UE, one or more selected SIBs to the remote UE, wherein each selected SIB is an acquired SIB that is on the list of interested SIB types of the remote UE (605).

2. The method of claim 1, wherein the relay UE obtains the list of interested SIB types of the remote UE through the sidelink connection with the remote UE using a PC5-radio resource control, in the following also referred to as RRC, message.

3. The method of claim 2, wherein the PC5-RRC message is an existing PC5-RRC message, or the PC5-RRC message is a new PC5-RRC message used during the establishment of a PC5 RRC connection.

4. The method of any one of claims 1 to 3, wherein the short message indicates a system information, in the following also referred to as SI, modification or a public warning system, in the following also referred to as PWS, notification.

5. The method of claim 4, wherein a PWS SIB is forwarded to the remote UE.

6. The method of claim 4 or 5, wherein the short message indicating the SI modification is a SIB1, and wherein an updated SIB1 is forwarded to the remote UE.

7. The method of any one of claims 1 to 6, wherein the relay UE obtains the list of interested SIB types of the remote UE by recording all SIB requests sent by the remote UE.

8. The method of any one of claims 1 to 7, wherein the relay UE acquires the one or more SIBs with on-demand SIB acquisition procedure.

9. The method of any one of claims 1 to 8, further comprising: storing the list of interested SIB types of the remote UE within a remote UE context of the remote UE during the lifetime of the remote UE.

10. A user equipment, in the following also referred to as UE, (111), comprising:
a transceiver (163) that is configured to transmit and receive radio frequency, in the following also referred to as RF, signal in a wireless network (100);
a sidelink connection handler (191) that is configured to establish a sidelink connection (121) with a remote UE (112) in the wireless network (100), wherein the UE (111) is served by an access link (131) with a base station (101) in the wireless network (100);
an interested list handler (192) that is configured to obtain a list of interested system information block, in the following also referred to as SIB, types of the UE (111);
**characterized by**:
a short message handler (193) that is configured to receive a short message from the wireless network (100) through the access link (131);
an acquisition handler (194) that is configured to acquire one or more SIBs from the wireless network (100) based on the received short message; and
a SIB handler (195) that is configured to forward one or more selected SIBs to the remote UE (112), wherein each selected SIB is an acquired SIB that is on the list of interested SIB types of the remote UE (112).

11. The UE (111) of claim 10, wherein the UE (111) is configured to obtain the list of interested SIB types of the remote UE (112) through the sidelink connection (121) with the remote UE (112) using a PC5-radio resource control, in the following also referred to as RRC, message.

12. The UE (111) of claim 11, wherein the PC5-RRC message is an existing PC5-RRC message, or wherein the PC5-RRC message is a new PC5-RRC message used during the establishment of a PC5 RRC connection.

13. The UE (111) of any one of claims 10 to 12, wherein the short message is configured to indicate a system information, in the following also referred to as SI, modification or a public warning system, in the following also referred to as PWS, notification.

14. The UE (111) of any one of claims 10 to 13, wherein the UE (111) is configured to obtain the list of interested SIB types of the remote UE (112) by recording all SIB requests sent by the remote UE (112), or wherein the UE (111) acquires the one or more SIBs with on-demand SIB acquisition procedure.

15. The UE (111) of any one of claims 10 to 14, further comprising: a storage manager (196) that is configured to store the list of interested SIB types of the remote UE (112) within a remote UE context of the remote UE (112) during the lifetime of the remote UE (112).

## Patentansprüche

1. Verfahren für ein Relais- Benutzergerät, im Folgenden auch als UE bezeichnet, umfassend:
Herstellen, durch das Relais-UE, einer Sidelink-Verbindung mit einem entfernten UE in einem drahtlosen Netzwerk, wobei das Relais-UE durch eine Zugangsverbindung mit einer Basisstation in dem drahtlosen Netzwerk versorgt wird (601);
Erhalten, durch das Relais-UE, einer Liste von interessierten Systeminformationsblock, im Folgenden auch als SIB bezeichnet, -Typen des entfernten UE (602);
**gekennzeichnet durch**:
Empfangen einer Kurznachricht von dem drahtlosen Netzwerk durch die Zugangsverbindung (603);
Erfassen eines oder mehrerer SIBs von dem drahtlosen Netzwerk basierend auf der empfangenen Kurznachricht (604); und
Weiterleiten, durch das Relais-UE, eines oder mehrerer ausgewählter SIBs an das entfernte UE, wobei jeder ausgewählte SIB ein erfasster SIB ist, der auf der Liste von interessierten SIB-Typen des entfernten UE ist (605).

2. Verfahren nach Anspruch 1, wobei das Relais-UE die Liste von interessierten SIB-Typen des entfernten UE durch die Sidelink-Verbindung mit dem entfernten UE unter Verwendung einer PC5- Funkressourcensteuerung, im Folgenden auch als RRC bezeichnet, -Nachricht erhält.

3. Verfahren nach Anspruch 2, wobei die PC5-RRC-Nachricht eine existierende PC5-RRC-Nachricht ist oder die PC5-RRC-Nachricht eine neue PC5-RRC-Nachricht ist, die während des Aufbaus einer PC5-RRC-Verbindung verwendet wird.

4. Verfahren nach einem der Ansprüche 1 bis 3, wobei die Kurznachricht eine Systeminformation, im Folgenden auch als SI bezeichnet, -Modifikation oder eine öffentliches-Warnsystem, im Folgenden auch als PWS bezeichnet, -Benachrichtigung angibt.

5. Verfahren nach Anspruch 4, wobei ein PWS-SIB an das entfernte UE weitergeleitet wird.

6. Verfahren nach Anspruch 4 oder 5, wobei die Kurznachricht, die die SI-Modifikation angibt, ein SIB1 ist, und wobei ein aktualisierter SIB1 an das entfernte UE weitergeleitet wird.

7. Verfahren nach einem der Ansprüche 1 bis 6, wobei das Relais-UE die Liste von interessierten SIB-Typen des entfernten UE durch Aufzeichnen aller durch das entfernte UE gesendeten SIB-Anforderungen erhält.

8. Verfahren nach einem der Ansprüche 1 bis 7, wobei das Relais-UE den einen oder die mehreren SIBs mit einer On-Demand-SIB-Erfassungsprozedur erfasst.

9. Verfahren nach einem der Ansprüche 1 bis 8, ferner umfassend: Speichern der Liste von interessierten SIB-Typen des entfernten UE innerhalb eines entferntes-UE-Kontextes des entfernten UE während der Lebensdauer des entfernten UE.

10. Benutzergerät, im Folgenden auch als UE bezeichnet, (111), umfassend:
einen Transceiver (163), der konfiguriert ist, um ein Funkfrequenz, im Folgenden auch als RF bezeichnet, -Signal in einem drahtlosen Netzwerk (100) zu senden und zu empfangen;
einen Sidelink-Verbindungshandler (191), der konfiguriert ist, um eine Sidelink-Verbindung (121) mit einem entfernten UE (112) in dem drahtlosen Netzwerk (100) herzustellen, wobei das UE (111) durch eine Zugangsverbindung (131) mit einer Basisstation (101) in dem drahtlosen Netzwerk (100) versorgt wird;
einen Interessierte-Liste-Handler (192), der konfiguriert ist, um eine Liste von interessierten Systeminformationsblock, im Folgenden auch als SIB bezeichnet, -Typen des UE (111) zu erhalten;
**gekennzeichnet durch**:
einen Kurznachricht-Handler (193), der konfiguriert ist, um eine Kurznachricht von dem drahtlosen Netzwerk (100) durch die Zugangsverbindung (131) zu empfangen;
einen Erfassungs-Handler (194), der konfiguriert ist, um einen oder mehrere SIBs von dem drahtlosen Netzwerk (100) basierend auf der empfangenen Kurznachricht zu erfassen; und
einen SIB-Handler (195), der konfiguriert ist, um einen oder mehrere ausgewählte SIBs an das entfernte UE (112) weiterzuleiten, wobei jeder ausgewählte SIB ein erfasster SIB ist, der auf der Liste von interessierten SIB-Typen des entfernten UE (112) ist.

11. UE (111) nach Anspruch 10, wobei das UE (111) konfiguriert ist, um die Liste von interessierten SIB-Typen des entfernten UE (112) durch die Sidelink-Verbindung (121) mit dem entfernten UE (112) unter Verwendung einer PC5- Funkressourcensteuerung, im Folgenden auch als RRC bezeichnet, -Nachricht zu erhalten.

12. UE (111) nach Anspruch 11, wobei die PC5-RRC-Nachricht eine existierende PC5-RRC-Nachricht ist oder wobei die PC5-RRC-Nachricht eine neue PC5-RRC-Nachricht ist, die während des Aufbaus einer PC5-RRC-Verbindung verwendet wird.

13. UE (111) nach einem der Ansprüche 10 bis 12, wobei die Kurznachricht konfiguriert ist, um eine Systeminformation, im Folgenden auch als SI bezeichnet, -Modifikation oder eine öffentliches-Warnsystem, im Folgenden auch als PWS bezeichnet, -Benachrichtigung anzugeben.

14. UE (111) nach einem der Ansprüche 10 bis 13, wobei das UE (111) konfiguriert ist, um die Liste von interessierten SIB-Typen des entfernten UE (112) durch Aufzeichnen aller durch das entfernte UE (112) gesendeten SIB-Anforderungen zu erhalten, oder wobei das UE (111) den einen oder die mehreren SIBs mit einer On-Demand-SIB-Erfassungsprozedur erfasst.

15. UE (111) nach einem der Ansprüche 10 bis 14, ferner umfassend: einen Speichermanager (196), der konfiguriert ist, um die Liste von interessierten SIB-Typen des entfernten UE (112) innerhalb eines entferntes-UE-Kontextes des entfernten UE (112) während der Lebensdauer des entfernten UE (112) zu speichern.

## Revendications

1. Procédé pour un équipement utilisateur, ci-après également appelé UE, relais comprenant :
l'établissement, par l'UE relais, d'une connexion de liaison latérale avec un UE distant dans un réseau sans fil, dans lequel l'UE relais est desservi par une liaison d'accès avec une station de base dans le réseau sans fil (601) ;
l'obtention, par l'UE relais, d'une liste de types de blocs d'informations système, ci-après également appelés SIB, intéressés de l'UE distant (602) ;
**caractérisé par** :
la réception d'un message court en provenance du réseau sans fil par l'intermédiaire de la liaison d'accès (603) ;
l'acquisition d'un ou plusieurs SIB en provenance du réseau sans fil sur la base du message court reçu (604) ; et
le transfert, par l'UE relais, d'un ou plusieurs SIB sélectionnés à l'UE distant, dans lequel chaque SIB sélectionné est un SIB acquis qui est sur la liste de types de SIB intéressés de l'UE distant (605).

2. Procédé selon la revendication 1, dans lequel l'UE relais obtient la liste de types de SIB intéressés de l'UE distant par l'intermédiaire de la connexion de liaison latérale avec l'UE distant en utilisant un message de commande de ressources radio, ci-après également appelée RRC, PC5.

3. Procédé selon la revendication 2, dans lequel le message RRC PC5 est un message RRC PC5 existant, ou le message RRC PC5 est un nouveau message RRC PC5 utilisé pendant l'établissement d'une connexion RRC PC5.

4. Procédé selon l'une quelconque des revendications 1 à 3, dans lequel le message court indique une modification d'informations système, ci-après également appelées SI, ou une notification de système d'avertissement public, ci-après également appelé PWS.

5. Procédé selon la revendication 4, dans lequel un SIB PWS est transféré à l'UE distant.

6. Procédé selon la revendication 4 ou 5, dans lequel le message court indiquant la modification de SI est un SIB1, et dans lequel un SIB1 mis à jour est transféré à l'UE distant.

7. Procédé selon l'une quelconque des revendications 1 à 6, dans lequel l'UE relais obtient la liste de types de SIB intéressés de l'UE distant en enregistrant toutes les demandes de SIB envoyées par l'UE distant.

8. Procédé selon l'une quelconque des revendications 1 à 7, dans lequel l'UE relais acquiert les un ou plusieurs SIB avec une procédure d'acquisition de SIB à la demande.

9. Procédé selon l'une quelconque des revendications 1 à 8, comprenant en outre : le stockage de la liste de types de SIB intéressés de l'UE distant dans un contexte d'UE distant de l'UE distant pendant la durée de vie de l'UE distant.

10. Équipement utilisateur, ci-après également appelé UE, (111), comprenant :
un émetteur-récepteur (163) qui est configuré pour émettre et recevoir un signal radiofréquence, ci-après également appelé RF, dans un réseau sans fil (100) ;
un gestionnaire de connexion de liaison latérale (191) qui est configuré pour établir une connexion de liaison latérale (121) avec un UE distant (112) dans le réseau sans fil (100), dans lequel l'UE (111) est desservi par une liaison d'accès (131) avec une station de base (101) dans le réseau sans fil (100) ;
un gestionnaire de liste intéressée (192) qui est configuré pour obtenir une liste de types de blocs d'informations système, ci-après également appelés SIB, intéressés de l'UE (111) ;
**caractérisé par** :
un gestionnaire de message court (193) qui est configuré pour recevoir un message court en provenance du réseau sans fil (100) par l'intermédiaire de la liaison d'accès (131) ;
un gestionnaire d'acquisition (194) qui est configuré pour acquérir un ou plusieurs SIB en provenance du réseau sans fil (100) sur la base du message court reçu ; et
un gestionnaire de SIB (195) qui est configuré pour transférer un ou plusieurs SIB sélectionnés à l'UE distant (112), dans lequel chaque SIB sélectionné est un SIB acquis qui est sur la liste de types de SIB intéressés de l'UE distant (112).

11. UE (111) selon la revendication 10, dans lequel l'UE (111) est configuré pour obtenir la liste de types de SIB intéressés de l'UE distant (112) par l'intermédiaire de la connexion de liaison latérale (121) avec l'UE distant (112) en utilisant un message de commande de ressources radio, ci-après également appelée RRC, PC5.

12. UE (111) selon la revendication 11, dans lequel le message RRC PC5 est un message RRC PC5 existant, ou dans lequel le message RRC PC5 est un nouveau message RRC PC5 utilisé pendant l'établissement d'une connexion RRC PC5.

13. UE (111) selon l'une quelconque des revendications 10 à 12, dans lequel le message court est configuré pour indiquer une modification d'informations système, ci-après également appelées SI, ou une notification de système d'avertissement public, ci-après également appelé PWS.

14. UE (111) selon l'une quelconque des revendications 10 à 13, dans lequel l'UE (111) est configuré pour obtenir la liste de types de SIB intéressés de l'UE distant (112) en enregistrant toutes les demandes de SIB envoyées par l'UE distant (112), ou dans lequel l'UE (111) acquiert les un ou plusieurs SIB avec une procédure d'acquisition de SIB à la demande.

15. UE (111) selon l'une quelconque des revendications 10 à 14, comprenant en outre : un gestionnaire de stockage (196) qui est configuré pour stocker la liste de types de SIB intéressés de l'UE distant (112) dans un contexte d'UE distant de l'UE distant (112) pendant la durée de vie de l'UE distant (112).
